Europäisches Patentamt

European Patent Office

Office européen des brevets

(11) Veröffentlichungsnummer: **0 185 985**
**A2**

(12) # EUROPÄISCHE PATENTANMELDUNG

(21) Anmeldenummer: 85115356.9

(22) Anmeldetag: 04.12.85

(51) Int. Cl.⁴: **B 29 C 45/82**

(30) Priorität: 28.12.84 DE 3447709

(43) Veröffentlichungstag der Anmeldung:
02.07.86 Patentblatt 86/27

(84) Benannte Vertragsstaaten:
AT CH DE FR GB IT LI NL

(71) Anmelder: Hehl, Karl
Arthur-Hehl-Strasse 32
D-7298 Lossburg-1(DE)

(72) Erfinder: Hehl, Karl
Arthur-Hehl-Strasse 32
D-7298 Lossburg-1(DE)

(74) Vertreter: Mayer, Friedrich Dr. et al,
Westliche 24
D-7530 Pforzheim(DE)

(54) Hydraulikeinrichtung für die Spritzgiesseinheit einer Kunststoff-Spritzgiessmaschine.

(57) Die Versorgungsleitung (13) der Hydraulikeinrichtung teilt sich in zwei Zweigleitungen (13z, 13z') mit je einem Proportionalmengen/Druckventil (12, 12') und einem Druckfühler (24, 24'). Die Zweigleitungen (13z,13z') stehen mit einer gemeinsamen Steuer-Rückleitung (22) über ein Wechselventil (33) alternativ in Verbindung. Die Zweigleitung (13z bzw. 13z') geringeren Druckes ist mit einer Regeleinrichtung, z.B. mit einem Durchflußmeßgerät (31, 31') zur Ausregelung der durch eine Druckasymmetrie der Zweigleitungen (13z, 13z') bedingten Förderstrom-Sollwertabweichung versehen.

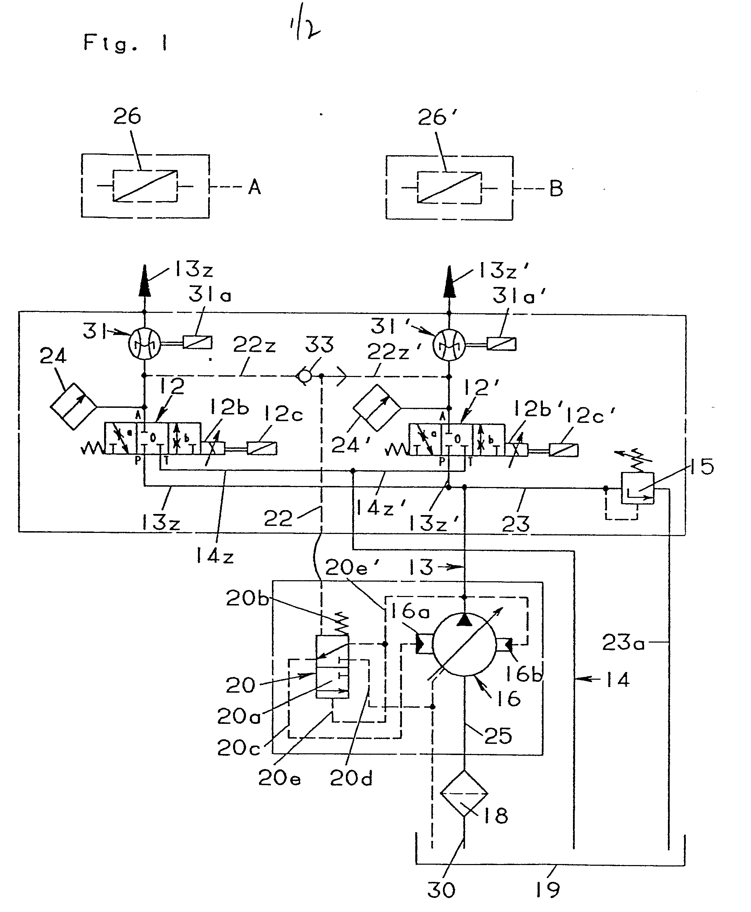

Dadurch wird erreicht, daß mit der Regelpumpe (16) der Hydraulikeinrichtung bei tragbarem technischen Aufwand mehrere hydraulische Verbraucher gleichzeitig versorgt werden können (Fig. 1).

Fig. 1

PATENTANWÄLTE
DR. FRIEDRICH E. MAYER
DIPL.-PHYS. G. FRANK
WESTLICHE 24
7530 PFORZHEIM

– 1 –

Hydraulikeinrichtung für die Spritzgießeinheit einer Kunststoff-Spritzgießmaschine.

Die Erfindung · bezieht sich auf eine Hydraulikeinrichtung für die Spritzgießeinheit einer Kunststoff-Spritzgießmaschine, mit einer die hydraulischen Verbraucher der Spritzgießeinheit über wenigstens eine Verbraucherleitung mit Drucköl speisenden Regelpumpe und mit einer in der Versorgungsleitung angeordneten Regeleinheit, die ein Proportionalmengen/druckventil und einen Druckfühler zur druckabhängigen Regelung (Druckprogrammregelung) aufweist und der einer Steuerrückleitung zugeordnet ist, die das Regelorgan der Regelpumpe mit der Verbraucherleitung nach dem Proportionalmengen/druckventil zwecks Aufrechterhaltung eines konstanten Betriebsdruckgefälles verbindet.

Bei einer bekannten Hydraulikeinrichtung dieser Art (DE-PS 31 19 095) ist der Energieverbrauch an der Regelpumpe den jeweiligen Leistungserfordernissen an einer unteren Grenze angepaßt, indem als Grundlage für den Betrieb und die Steuerung ein am Regelorgan der Regelpumpe voreinstellbares, gerade noch ausreichendes konstantes Druckgefälle gewählt wird (im folgenden als Betriebs-Druckgefälle bezeichnet). Andererseits genügt die bekannte Hydraulikeinrichtung extrem unterschiedlichen Betriebsanforderungen, weil eine vom Sollwert abweichende Mengen- oder Druckeinstellung des Proportionalmengen/druckventils alternativ mittels Druckfühler,

- 2 -

0185985

Wegabtaster oder Streckenspannungswandler im Regelkreis auf den Sollwert rückführbar ist. Dabei kann von der Regelpumpe allerdings nur ein einziger Verbraucher versorgt werden.

Der Erfindung liegt die Aufgabe zugrunde, eine Hydraulikeinrichtung der eingangs genannten Gattung derart weiterzubilden, daß mit der Regelpumpe bei tragbarem technischen Aufwand mehrere hydraulische Verbraucher gleichzeitig versorgt und dadurch die Spritzzyklen verkürzt werden können.

Diese Aufgabe wird dadurch gelöst, daß die Zweigleitungen der Versorgungsleitung zur Versorgung zweier Versorgungsgruppen mit je einem Proportionalmengen/druckventil und einem Druckfühler versehen sind und daß die Zweigleitungen über ein Wechselventil mit einer gemeinsamen Steuerrückleitung zur Regelpumpe alternativ in Verbindung stehen sowie je mit einer Regeleinrichtung (Durchflußmeßgerät; hydraulische Druckwaage; Streckenspannungswandler) zur Ausregelung der durch eine Asymmetrie der Drücke in den Zweigleitungen bedingten Förderstrom-Sollwertabweichung in der Zweigleitung geringeren Druckes versehen sind.

Bei einer solchen Ausbildung können zum Beispiel innerhalb des Spritzzyklus die hydraulischen Antriebseinheiten für folgende Operationen gleichzeitig versorgt und programmgerecht gesteuert werden: Öffnen der Spritzgießform sowie Auswerfen des Spritzlings aus der Spritzgießform; Öffnen der Spritzgießform sowie Entfernen eines Kerns aus dem Spritzling mit Hilfe eines Kernzuges; Entfernen zweier Kerne aus dem Spritzling mit Hilfe gesonderter Kernzüge; Vorplastifizieren des Kunststoffmaterials im Plastifizierzylinder durch Rotation der unter dem Staudruck zurückweichenden Förderschnecke sowie Schließen bzw. Öffnen der Spritzgießform.

Bei einer Ausbildung entsprechend Anspruch 2 ergibt sich bei einem Einsatz eines Durchflußmeßgerätes höherer Preisklasse eine sehr exakte Ausregelung der Abweichung vom Soll-Betriebsdruckgefälle.

Demgegenüber ist eine als hydraulische Druckwaage ausgebildete Regeleinrichtung gemäß Anspruch 3 kostengünstiger und weist weniger Verschleißteile auf.

Eine Regeleinrichtung gemäß Anspruch 4 arbeitet mit einem insgesamt etwas größeren technischen Aufwand mit höchster Präzision.

In vielen Fällen kann es zweckmäßig sein, Mischformen beim Einsatz der Regeleinrichtung gemäß den Ansprüchen 5,6 vorzusehen, wenn an den einzelnen Verbrauchern unterschiedliche Erfordernisse hinsichtlich der Exaktheit der Ausregelung vorliegen.

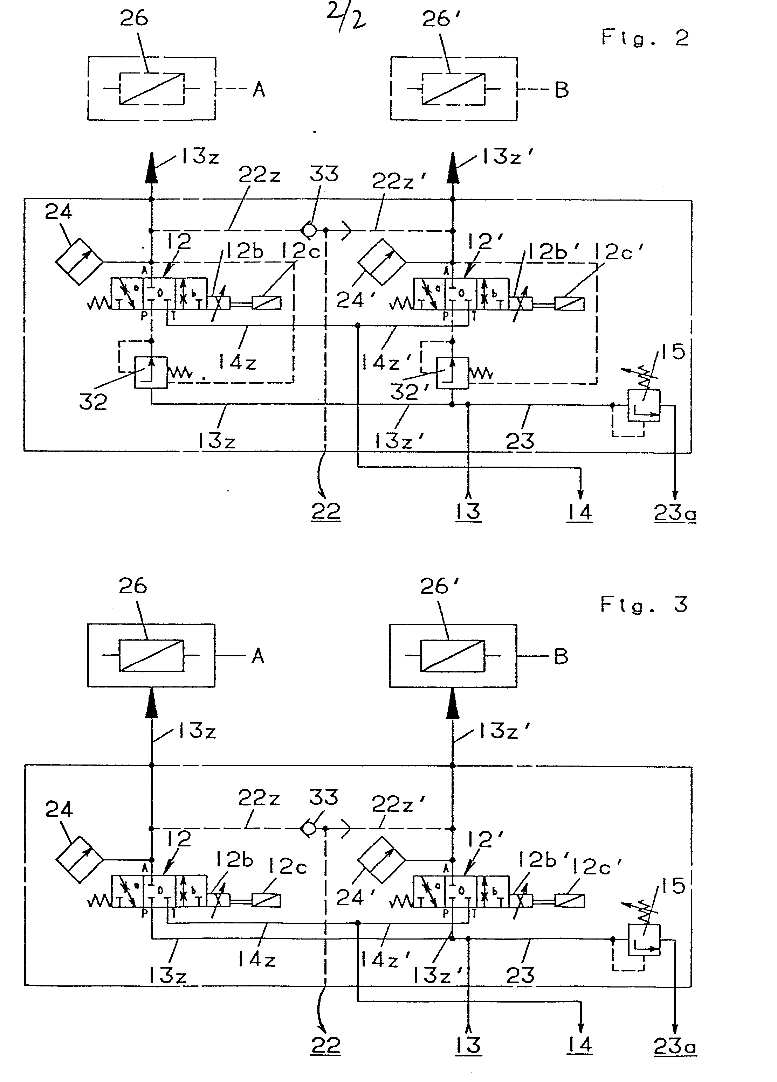

Auch kann es in manchen Fällen zweckmäßig sein, dem System an einem oder an beiden Verbrauchern zusätzlich zu der ausregelnden hydraulischen Druckwaage bzw. dem ausregelnden Durchflußmeßgerät Strecken-Spannungswandler zur alternativen, genaueren Ausregelung zur Verfügung zu stellen, was in den Fig. 1 und 2 angedeutet ist.

Nachstehend wird die Erfindung anhand der Zeichnung an einigen Ausführungsbeispielen erläutert. Es zeigen in schematischer Darstellung:

Fig. 1        den Hydraulikkreis der mit Durchflußmeßgerät ausgerüsteten Hydraulikeinrichtung,

Fig. 2        den Hydraulikkreis der mit hydraulischen Druckwaagen und gegebenenfalls mit Streckenspannungswandlern zur Ausregelung arbeitenden Hydraulikeinrichtung (ohne Pumpengruppe) und

0185985

Fig. 3       den Hydraulikkreis einer mit Streckenspannungs-
             wandlern als Regeleinrichtung arbeitenden Hydraulik-
             einrichtung (ohne Pumpengruppe).

Nach dem Grundkonzept der Hydraulikeinrichtung versorgt eine
mit Verstellorgan 20 versehene Regelpumpe 16 im Bedarfsfalle
gleichzeitig zwei Verbraucher A und B, je nach dem in den Speicher
des Rechners der Kunststoff-Spritzgießmaschine eingegebenen
Programm. Dies geschieht über eine Versorgungsleitung 13, die
sich in zwei Zweigleitungen 13z und 13z' für die beiden Verbraucher A und B mit je einem Proportionalmengen/druckventil
12 bzw. 12' und je einem Druckfühler 24 bzw. 24' teilt. Die
Zweigleitungen 13z und 13z' stehen mit einer gemeinsamen Steuerrückleitung 22 über ein Wechselventil 33 alternativ in Verbindung,
die Verstellorgan 20 der Regelpumpe 16 mit den Zweigleitungen
13z,13z' nach den Proportionalmengen/Druckventilen 12 und 12'
zwecks Einhaltung eines konstanten Betriebs-Druckgefälles verbindet. Das Betriebsdruckgefälle liegt an der unteren Grenze
und ist als Grundlage für den Betrieb der Hydraulikeinrichtung gerade noch ausreichend.

In jeder Zweigleitung 13z und 13z' ist eine Regeleinrichtung
zur Ausregelung der durch eine Druckasymmetrie bedingten Förderstrom-Sollwert-Abweichung in der Zweigleitung 13z oder 13z'
geringeren Druckes vorgesehen. Als Regeleinrichtung können ein
Durchflußmeßgerät 31,31' (Fig. 1) eine hydraulische Druckwaage
32;32' (Fig. 2) oder ein Strecken-Spannungswandler 26,26' (Fig.3)
vorgesehen sein, wobei auch Mischformen der genannten Steuerungskonzepte denkbar sind.

Wird programmgemäß nur an einem Verbraucher A oder B gearbeitet,
also ein Ölförderstrom gegen einen entsprechenden Widerstand
gefordert, der die Ausbildung eines entsprechenden Druckes in
der zugehörigen Zweigleitung 13z oder 13z' zur Folge hat, so
wird der Druck in der Zweigleitung 13z' bzw. 13z des anderen Verbrauchers B bzw. A über das betreffende Proportionalmengen/ Druckventil 12' bzw. 12 zu Null geregelt. Zuvor schließt das Wechselventil 33 die Zweigrückleitung 22z'; 22z dank des höheren Druckes in der Zweigrückleitung 22z; 22z'. Somit arbeitet nur die einen einzigen Verbraucher versorgende Hydraulikeinrichtung. Dies in gleicher Weise wie die bekannte Hydraulikeinrichtung gemäß dem Gattungsbegriff bei einem vorbestimmten konstanten Betriebsdruckgefälle von z.B. 11 bar. Die Regeleinrichtung (Durchflußmeßgerät 31 bzw. 31' oder hydraulische Druckwaage 32 bzw. 32' oder Streckenspannungswandler 26;26') in der nicht arbeitenden Zweigleitung 13z' bzw. 13z hat in diesem Falle mangels Abweichung vom Sollwert des Betriebs-Druckgefälles keinen Einfluß auf die Steuerung.

Die Konstanz des voreingestellten Betriebsdruckgefälles, z.B. von 11 bar, wird durch das Verstellorgan 20 der Regelpumpe 16 in bekannter Weise wie folgt gewährleistet: Bei Überschreiten wird der Regelschieber im Druckregler 20a über Steuerleitungen 20e',20e soweit entgegen der Kraft der Feder 20b verschoben, bis der Druck vom großen Verstellkolben 16a über die Steuerleitung 20c,20d zum Tank 19 entlastet wird. Dadurch schiebt der kleine Verstellkolben 16b die Regelpumpe 16 auf geringere Exzentrität, das heißt auf geringere Förderleistung, bis das Betriebsdruckgefälle von 11 bar wieder erreicht ist. Bei Unterschreiten des eingestellten Betriebsdruckgefälles wird der Regelschieber im Druckregler 20a von der vorgespannten Feder 20b soweit in gegenteiliger Richtung verschoben, bis die Steuerleitung 20c mit der Steuerleitung 20e' kommuniziert. Dadurch wird der große Verstellkolben beaufschlagt und steuert die Regelpumpe 16 solange auf große Exzentrität, das heißt auf größere Förderleistung, bis das Betriebsdruckgefälle von 11 bar wieder erreicht ist. Da der Regelschieber im Druckregler 20a außer der Feder 20b von dem in der Steuerrückleitung 22 herrschenden Druck belastet ist, erfolgt die Einregelung des konstanten Betriebsdruckgefälles auf der Grundlage des in der Zweigleitung 13z bzw. 13z' jeweils herrschenden Druck. Es handelt sich also demzufolge um eine lastabhängige Regelung der Regelpumpe 16 auf ein konstantes Betriebsdruckgefälle. Folgende weitere Kriterien der Arbeitsweise der Hydraulikeinrichtung bei Versorgung nur eines Verbrauchers sind von Bedeutung:

Bei Förderstromregelung wird das Proportionalmengen/druckventil 12 bzw. 12' über den Wegabtaster 12c;12c' auf einen vom Programm vorgegebenen Querschnitt, das heißt auf eine durch das Programm bestimmte Durchflußmenge aufgesteuert. Die vorgenannte lastabhängige Regelung erfolgt auf der Grundlage dieser Durchflußmenge.

Wird in der Zweigleitung 13z oder 13z' ein bestimmter, im Programm vorgegebener Druckgrenzwert erreicht, so geht das Regelsystem selbsttätig auf Druckregelung über. Dabei wird der Durchfluß im Proportionalmengen-Druckventil 12 bzw. 12' verändert, daß in der Verbraucherleitung 13z bzw. 13z' der vom Programm vorgegebene Druck gehalten wird. Durch die Konstanthaltung des Druckes kann der Druck auf der Seite der Feder 20b im Druckregler 20a nicht weiter ansteigen. Dadurch verringert sich der Förderstrom der Regelpumpe 16 auf die zur Druckerhaltung notwendige Menge. Dies bedeutet, daß das Betriebsdruckgefälle durch die auf größeren Förderstrom gesteuerte Pumpe 16 überschritten wird. Dies bewirkt ein Verschieben des Regelschiebers über die Steuerleitungen 20e',20e in Richtung der Feder 20b. Dadurch wird, wie oben bereits beschrieben, die Regelpumpe 16 auf geringere Förderleistung gesteuert, und zwar so lange, bis das Betriebsdruckgefälle von 11 bar wieder erreicht ist. Bei Unterschreiten des Betriebsdruckgefälles wird die Regelpumpe 16, wie oben bereits ebenfalls beschrieben, auf größeren Förderstrom gesteuert, bis das Betriebsdruckgefälle erreicht ist. Bei Druckregelung erfolgt also die erörterte lastabhängige Regelung auf der Grundlage des in der Zweigleitung 13z bzw. 13z' vorgegebenen Druckes.

Ergibt sich in der Zeigleitung 13z bzw. 13z' zum arbeitenden Verbraucher A bzw. B eine unerwünschte, das heißt vom Programm nicht vorgesehene Druckerhöhung, so wird die aufgetretene Druckspitze durch eine vom Rechner initiierte Verschiebung des Steuerschiebers im Proportionalmengen/druckventil 12 bzw. 12' über die Tankleitung 14z, 14 bzw. 14z', 14 in den Tank 19 abgeleitet, ohne daß es zu einer nennenswerten Druckerhöhung im Proportionalmengen/druckventil 12 bzw. 12' kommt. Wie die im Spritzzyklus der Spritzgießmaschine in zeitlicher Aufeinanderfolge arbeitenden Verbraucher beispielsweise versorgt und gesteuert werden können, ist in der dem Gattungsbegriff zugrunde liegenden DE-PS 31 19 095 im einzelnen dargelegt. Die weitere Beschreibung beschränkt sich daher auf die gleichzeitige Steuerung und Versorgung zweier Verbraucher, für welche in der Beschreibungseinleitung Beispiele angegeben sind: Das Wechselventil 33 trennt durch Sperrung der Zweig-Steuerrückleitung 22z' bzw. 22z diejenige Zweigleitung 13z' bzw. 13 von der Steuerrückleitung 22 ab, in welcher der geringere Druck herrscht. Die von der Steuerrückleitung 22 nicht abgetrennte Zweigleitung 13z bzw. 13z' ist daher über die Steuerrückleitung 22 und das Stellorgan 20 und das voreingestellte konstante Betriebsdruckgefälle gesteuert, das an dem Proportionalmengen/Druckventil 12 bzw. 12' ansteht. Die Regelpumpe 16 arbeitet also in Anpassung an die Leistungserfordernisse desjenigen Verbrauchers A bzw. B, der von der nicht abgetrennten Zweigleitung 13z bzw. 13z' versorgt ist. Da die Versorgungsleitung 13 das Proportionalmengen/Druckventil 12' oder 12 mit gleichem Druck beaufschlagt, ist das Druckgefälle am Proportionalventil 12' oder 12 der von der Steuerrückleitung 22 abgetrennten Zweigversorgungsleitung 13z' oder 13z um die Druckdifferenz zwischen den beiden Zweigleitungen größer als am Proportionalmengen/Druckventil 12 bzw. 12'. Diese Druckdifferenz wird im folgenden als Druckasymmetrie bezeichnet. Die Druckasymmetrie bedingt also ein Abweichen vom Sollwert des Betriebsdruckgefälles am Proportionalmengen/Druckventil 12' oder 12 der Zweigleitung 13z' oder 13z geringeren Druckes.

Zur Ausregelung dieser Abweichung ist in jeder Zweigleitung 13z und 13z' eine Regeleinrichtung angeordnet, die die Größe der Abweichung erfaßt und auf das Betriebs-Druckgefälle ausregelt. Im Falle des Ausführungsbeispieles gemäß Fig. 1 findet als Regeleinrichtung ein Durchflußmeßgerät 31 bzw. 31' Verwendung, dessen Wegabtaster 31a bzw. 31a' die Geometrie der Abweichung in elektrische Signale für den Rechner umwandelt. Dieser steuert das dazugehörige Proportionalmengen/Druckventil so lange an, bis die vorgenannte Abweichung vom Betriebsdruckgefälle durch entsprechende Veränderung der Lage des Schiebers ausgeregelt ist.

Im Beispiel der Fig. 2 wird die Abweichung vom Betriebsdruckgefälle am Proportionalmengen/Druckventil 12' oder 12 der Zweigleitung 13z' bzw. 13z durch eine hydraulische Druckwaage 32' oder 32 ausgeregelt, und zwar unmittelbar auf hydraulischem Wege. Daher bleibt der Durchflußquerschnitt des zugehörigen Proportionalmengen/druckventils 12 unverändert.

Im Ausführungsbeispiel der Fig. 3 wird die Abweichung mit Hilfe von unmittelbar am Verbraucher angeordneten Streckenspannungswandlern 26' oder 26 über den Rechner durch entsprechende Veränderung des Durchflußquerschnittes am Proportionalmengen/druckventil 12 aus geregelt.

In den Beispielen der Fig. 1 und 2 ist durch unterbrochene Linienführung angedeutet, daß je zusätzlich an den Verbrauchern A und B Streckenspannungswandler zur Ausregelung bei extrem hohen Anforderungen an die Genauigkeit vorgesehen sein können. Je nach den Leistungsanforderungen an den Verbrauchern kann es in einzelnen Fällen auch zweckmäßig sein, in der einen Zweigleitung 13z oder 13z' eine hydraulische Druckwaage und in der anderen Zweigleitung 13z' oder 13z ein Durchflußmeßgerät vorzusehen. Das Durchflußmeßgerät 31 bzw. 31' ist nach dem Proportionalmengen/druckventil 12 bzw. 12', die hydraulische Druckwaage 32 bzw. 32' ist vor dem Proportionalmengen/druckventil 12 bzw. 12' angeordnet.

Wie aus den Figuren ersichtlich, sind die Zweigleitungen 13z; 13z' über Zweig-Steuerrückführleitungen 22z; 22z' an die Eingänge des Wechselventils 33 und somit an die gemeinsame Steuerrückführleitung 22 angeschlossen.

Die Versorgungsleitung 13 steht im übrigen über eine Überbrückungsleitung 23 mit einem Druckbegrenzungsventil 15 mit Tankleitung 23a in Verbindung.

In der vom Tank 19 führenden Saugleitung 25 der Regelpumpe 16 ist ein Filter 18 angeordnet.

Abschließend ist darauf hinzuweisen, daß im Bedarfsfalle die Wegabtaster 12c, 12c' auf Sollwert zur Realisierung einer geometrischen Größe in den Proportionalmengen/Druckventilen 12,12' regelbar sind. Mit 12b,12b' sind die Steuermagnete der Proportionalmengen/Druckventile 12,12' bezeichnet.

Die wesentlichen Kriterien der Steuerung zweier Verbraucher lassen sich wie folgt zusammenfassen: Das Wechselventil 33 orientiert sich am Verbraucher höheren Drucks. Demzufolge wird das Soll-Betriebsdruckgefälle stets in der Zweigleitung dieses Verbrauchers höheren Druckes realisiert. In der anderen Zweigleitung ist infolge des geringeren Druckes eine Erhöhung der Durchflußmenge am zugehörigen Proportionalmengen/Druckventil zu verzeichnen. Die Regeleinrichtung erfaßt jedoch die höhere Durchflußmenge und steuert das Proportionalmengen/Druckventil über den Rechner entsprechend zu, so daß die Soll-Durchflußmenge auch hier realisierbar ist. Im Falle der Verwendung einer hydraulischen Druckwaage als Regeleinrichtung findet eine hydraulische Kompensation des höheren Druckes statt, indem diese Druckwaage das Druckgefälle in der zugehörigen Zweigleitung auf das Soll-Betriebsdruckgefälle begrenzt.

Bei den marktüblichen Regelpumpen stehen für die Druckregelung ca. 250 bar zur Verfügung, so daß den Erfordernissen an beiden Verbrauchern in aller Regel ohne weiteres genügt werden kann, wobei die Aufteilung des verfügbaren Druckes kein Problem ist.

Für die Geschwindigkeitsregelung kann beispielsweise eine Förderstromkapazität von 100 l/min. angenommen werden, wobei die Aufteilung in beliebige Kapazitätskomponenten, z.B. Förderströme von 60l und 20l möglich ist.

- 11 -                                    0185985

Patentansprüche

1. Hydraulikeinrichtung für die Spritzgießeinheit einer Kunststoff-Spritzgießmaschine, mit einer die hydraulischen Verbraucher der Spritzgießeinheit über wenigstens eine Verbraucherleitung mit Drucköl speisenden Regelpumpe und mit
einer in der Versorgungsleitung angeordneten Regeleinheit,
die ein Proportionalmengen/druckventil und einen Druckfühler
zur druckabhängigen Regelung (Druckprogrammregelung) aufweist und der einer Steuerrückleitung zugeordnet ist, die
das Regelorgan der Regelpumpe mit der Verbraucherleitung
nach dem Proportionalmengen/druckventil zwecks Aufrechterhaltung eines konstanten Betriebsdruckgefälles verbindet,
dadurch gekennzeichnet, daß die Zweigleitungen (13z,13z')
der Versorgungsleitung (13) zur Versorgung zweier Versorgungsgruppen mit je einem Proportionalmengen/druckventil (12,12')
und einem Druckfühler (24,24') versehen sind und daß die
Zweigleitungen (13z,13z') über ein Wechselventil (33) mit
einer gemeinsamen Steuerrückleitung (22) zur Regelpumpe
(16) alternativ in Verbindung stehen sowie je mit einer
Regeleinrichtung (Durchflußmeßgerät 31; hydraulische Druckwaage 32; Streckenspannungswandler 26) zur Ausregelung der
durch eine Asymmetrie der Drücke in den Zweigleitungen (13z,
13z') bedingten Förderstrom-Sollwertabweichung in der Zweigleitung (13z;13z') geringeren Druckes versehen sind.

2. Hydraulikeinrichtung nach Patentanspruch 1, dadurch gekennzeichnet, daß in der Zweigleitung (13z;13z') als Regeleinrichtung ein Durchflußmeßgerät (31;31') nach Abzweig der
Steuerrückleitung (22z,22z') angeordnet ist.

3. Hydraulikeinrichtung nach Patentanspruch 1, dadurch gekennzeichnet, daß in der Zweigleitung (13z;13z') als Regeleinrichtung eine hydraulische Druckwaage (32;32') vor dem Proportionalmengen/druckventil (12;12') angeordnet ist.

4. Hydraulikeinrichtung nach einem der Ansprüche 1-3, dadurch gekennzeichnet, daß in der Zweitleitung (13z;13z') als Regeleinrichtung unmittelbar am hydraulischen Verbraucher (A;B) ein Streckenspannungswandler (26;26') angeordnet ist.

5. Hydraulikeinrichtung nach Patentanspruch 1, dadurch gekennzeichnet, daß in der einen Zweigleitung (13z;13z') als Regeleinrichtung ein Durchflußmeßgerät (31;31') und in der anderen Zweigleitung (13z';13z) eine hydraulische Druckwaage (32',32) angeordnet ist.

6. Hydraulikeinrichtung nach einem der vorhergehenden Patentansprüche, dadurch gekennzeichnet, daß in der einen Zweigleitung (13z;13z') als Regeleinrichtung ein Durchflußmeßgerät (31;31') oder eine hydraulische Druckwaage (32;32') und in der anderen Zweigversorgungsleitung (13';13) unmittelbar am hydraulischen Verbraucher (A;B) ein Streckenspannungswandler (26';26) angeordnet ist.

Fig. 1

0185985

1/2

0185985

2/2

Fig. 2

Fig. 3